# EUROPÄISCHE PATENTSCHRIFT

(11) **EP 3 387 255 B1**
(45) Veröffentlichungstag und Bekanntmachung des Hinweises auf die Patenterteilung: **26.06.2019**
(21) Anmeldenummer: 16823156.1
(22) Anmeldetag: 14.11.2016
(51) Int. Cl.: F04B 25/00, F04B 25/02, F04B 27/02, F04B 27/04

(54) **DOPPELKOLBENKOMPRESSOR EINER DRUCKLUFT-VERSORGUNGSEINRICHTUNG**
DOUBLE PISTON COMPRESSOR OF A SUPPLY DEVICE FOR COMPRESSED AIR
COMPRESSEUR A PISTON DOUBLE DE DISPOSITIF D'ALIMENTATION D'AIR COMPRIMÉ

(30) Priorität: 08.12.2015 DE 102015015946
(43) Veröffentlichungstag der Anmeldung: 17.10.2018
(73) Patentinhaber: WABCO GmbH, 30453 Hannover (DE)
(72) Erfinder: MEISSNER, Frank, 30453 Hannover (DE); SEEGER, Marco, 30855 Langenhagen (DE)
(74) Vertreter: Rabe, Dirk-Heinrich
(86) Internationale Anmeldenummer: PCT/EP2016/001895
(87) Internationale Veröffentlichungsnummer: WO 2017/097393

(56) Entgegenhaltungen:
- DE-A1-102012 223 114
- DE-C- 918 042
- DE-C2- 4 433 068
- DE-C2- 19 715 291
- DE-U- 1 932 737

## Beschreibung

Die Erfindung betrifft einen Doppelkolbenkompressor einer Druckluft-Versorgungseinrichtung, mit einer Niederdruckstufe und einer Hochdruckstufe, die jeweils einen Zylinder mit einem darin axialbeweglich geführten Kolben aufweisen, wobei die beiden Zylinder bezüglich einer Drehachse einer Antriebswelle radial gegenüber angeordnet sind, wobei die beiden Kolben mittels einer Kolbenstange starr miteinander verbunden sind, wobei die beiden Kolben über eine Kulissenführung mit der Antriebswelle in Triebverbindung sind, wobei die Kulissenführung eine in der Kolbenstange angeordnete, mit zwei parallelen Kulissenbahnen versehene und senkrecht zu der Drehachse der Antriebswelle ausgerichtete Ausnehmung aufweist, und bei der die Kulissenführung ein mit der Ausnehmung in Eingriff stehendes, bezüglich der Drehachse der Antriebswelle achsparallel angeordnetes, und mit einer Exzentrizität an der Antriebswelle befestigtes Antriebselement aufweist.

Doppelkolbenkompressoren mit zwei über eine Kolbenstange starr miteinander verbundenen Kolben, die axialbeweglich in bezüglich der Drehachse einer Antriebswelle radial gegenüberliegend angeordneten Zylindern geführt sind, sind seit längerem in antriebstechnisch unterschiedlichen Ausführungen bekannt.

In einer zum Beispiel aus der DE 103 21 771 B4 bekannten Bauart eines Doppelkolbenkompressors steht die Kolbenstange über eine Pleuelstange mit der Antriebswelle in Antriebverbindung. Die Pleuelstange ist einerseits über einen in eine erste endseitige Bohrung eingreifenden, exzentrisch an der Antriebswelle befestigten Kurbelzapfen und andererseits über einen in eine zweite endseitige Bohrung eingreifenden, außermittig an der Kolbenstange befestigten Triebzapfen gelenkig mit der Antriebswelle und der Kolbenstange verbunden.

Bei einer wesentlich einfacheren und Platz sparenderen Bauweise eines Doppelkolbenkompressors steht die Kolbenstange dagegen nur über eine Kulissenführung mit der Antriebswelle in Antriebsverbindung. Die Kulissenführung umfasst eine in der Kolbenstange ausgebildete und mit zwei parallelen Kulissenbahnen versehene sowie senkrecht zu der Drehachse der Antriebswelle ausgerichtete Ausnehmung, und ein mit der Ausnehmung in Eingriff stehendes, bezüglich der Drehachse der Antriebswelle achsparallel und exzentrisch an der Antriebswelle befestigtes Antriebselement. Abhängig von der resultierenden Kraftrichtung der auf die beiden Kolben wirksamen Druckkräfte liegt das Antriebselement an einer der beiden Kulissenbahnen an und geht bei einer Umkehr der resultierenden Kraftrichtung unter Überbrückung des in der Kulissenführung zwangsläufig vorhandenen Leerspiels zu einer Anlage an die andere Kulissenbahn über. Die Ausnehmung in der Kolbenstange kann U-förmig ausgebildet sein, wie es zum Beispiel aus der DE 918 042 B bekannt ist. In diesem Fall bilden die Seitenwände der Ausnehmung die parallelen Kulissenbahnen, und die beiden Teile der Kolbenstange sind über die Bodenwand der Ausnehmung miteinander verbunden.

Alternativ dazu kann die Ausnehmung als eine schlitzförmige Durchgangsöffnung ausgebildet sein, wie es beispielsweise aus Fig. 8 der DE 44 33 068 C2 und der DE 10 2012 223 114 A1 bekannt ist. In diesem Fall bilden die Seitenwände der Ausnehmung die parallelen Kulissenbahnen. Zur Verbindung der beiden Teile der Kolbenstange sind bei dieser Ausführung der Kulissenführung endseitige Stege erforderlich, die zumeist kreisbogenförmig ausgeführt sind, bei entsprechendem Abstand aber auch gerade ausgeführt sein können. Bei dem Antriebselement kann es sich um einen Kurbelzapfen handeln, der bezüglich der Drehachse der Antriebswelle achsparallel und exzentrisch an der Antriebswelle befestigt ist, und der, wie es beispielsweise aus Fig. 8 der DE 44 33 068 C2 bekannt ist, unmittelbar gleitbeweglich an den parallelen Kulissenbahnen der Kulissenführung geführt ist.

Zur Reduzierung des Antriebswiderstands und der Abnutzung der Kulissenbahnen kann das Antriebselement auch, wie es zum Beispiel aus der DE 918 042 B, der DE 1 932 737 U und der DE 197 15 291 C2 bekannt ist, als der Außenring eines Wälzlagers ausgebildet sein, welches auf einem exzentrisch an der Antriebswelle befestigten Kurbelzapfen angeordnet ist, und dessen Außenring rollbeweglich an den Kulissenbahnen der Kulissenführung geführt ist.

In der EP 0 389 414 B1 ist dagegen ein größerer, für einen stationären Einsatz vorgesehener Hubkolbenkompressor mit vier paarweise radial gegenüberliegenden Zylindern und miteinander in Verbindung stehenden Kolben beschrieben, bei dem jeweils ein außen weitgehend rechteckiger Gleitkörper relativ widerstandsarm über ein Wälzlager drehbar auf einem exzentrisch an der Antriebswelle befestigten Kurbelzapfen gelagert sowie über eine Wälzkörper aufweisende Linearführung wälzverschiebbar zwischen an Kulissenbahnen der Kulissenführung geführt ist.

Den bekannten Bauarten von Doppelkolbenkompressoren mit Kulissenführungen ist gemeinsam, dass die beiden parallelen Kulissenbahnen eben ausgeführt sowie senkrecht zu der Längsachse der Kolbenstange ausgerichtet sind. Diese Ausbildung und Anordnung der Kulissenbahnen führt zwangsläufig zu einer regelmäßigen sinusförmigen Hubkurve der Kolben mit einer der Exzentrizität des Kurbelzapfens entsprechenden Amplitude. Eine derartige sinusförmige Hubkurve der Kolben ist zwar häufig erwünscht, kann aber bei bestimmten Anwendungen auch nachteilig sein.

Der vorliegenden Erfindung liegt daher die Aufgabe zugrunde, einen Doppelkolbenkompressor mit einer zwei parallele Kulissenbahnen aufweisenden Kulissenführung der eingangs genannten Bauart im Hinblick auf Variationsmöglichkeiten der Hubkurve der Kolben weiterzubilden.

Diese Aufgabe ist durch einen Doppelkolbenkompressor mit den Merkmalen des Anspruchs 1 gelöst. Vorteilhafte Weiterbildungen dieses Doppelkolbenkompressors sind in den Unteransprüchen definiert.

Der Erfindung liegt die Erkenntnis zu Grunde, dass die regelmäßige sinusförmige Hubkurve der Kolben durch eine geeignete Veränderung der Ausrichtung und/oder der Kontur der parallelen Kulissenbahnen der Kulissenführung in gewünschter Weise modifiziert werden kann.

Die Erfindung geht demnach aus von einem Doppelkolbenkompressor einer Druckluft-Versorgungseinrichtung, welcher eine Niederdruckstufe und eine Hochdruckstufe aufweist. Die beiden Druckstufen weisen jeweils einen Zylinder mit einem darin axialbeweglich geführten Kolben auf, wobei die beiden Zylinder bezüglich einer Drehachse einer Antriebswelle radial gegenüber angeordnet sind. Die beiden Kolben sind mittels einer Kolbenstange starr miteinander verbunden und stehen über eine Kulissenführung mit der Antriebswelle in Antriebsverbindung. Die Kulissenführung weist eine in der Kolbenstange angeordnete, mit zwei parallelen Kulissenbahnen versehene und senkrecht zu der Drehachse der Antriebswelle ausgerichtete Ausnehmung auf. Außerdem weist die Kulissenführung ein mit der Ausnehmung in der Kolbenstange in Eingriff stehendes und bezüglich der Drehachse der Antriebswelle achsparallel angeordnetes sowie mit einer Exzentrizität an der Antriebswelle befestigtes Antriebselement auf.

Gemäß der Erfindung ist außerdem vorgesehen, dass die Kulissenbahnen der Kulissenführung derart ausgebildet und angeordnet sind, dass im Betrieb des Doppelkolbenkompressors die Bewegung der Kolben einer Hubkurve folgt, welche von einer regelmäßigen sinusförmigen Hubkurve abweicht, die eine Amplitude gemäß der Exzentrizität des Antriebselementes aufweist.

Eine erste erfindungsgemäße Modifikation der Kulissenführung sieht vor, dass die Kulissenbahnen der Kulissenführung gegenüber einer Senkrechten auf einer Längsachse der Kolbenstange in der Drehrichtung der Antriebswelle geneigt angeordnet sind. Hierdurch wird erreicht, dass die Hubkurve der Kolben in Richtung spät phasenverschoben wird, und dass die Amplitude der Hubkurve über die Exzentrizität des Antriebselementes hinaus erhöht wird. Die Hubweite, also der Drehwinkelbereich der Saug- und Druckhübe der Kolben, bleibt dagegen unverändert.

Eine dazu alternative zweite erfindungsgemäße Modifikation der Kulissenführung sieht vor, dass die Kulissenbahnen der Kulissenführung gegenüber der Senkrechten auf der Längsachse der Kolbenstange entgegen der Drehrichtung der Antriebswelle geneigt angeordnet sind. Hierdurch wird erreicht, dass die Hubkurve der Kolben in Richtung früh phasenverschoben wird, und dass die Amplitude der Hubkurve über die Exzentrizität des Antriebselementes hinaus erhöht wird. Die Hubweite der Saug- und Druckhübe der Kolben bleibt auch in diesem Fall unverändert.

Aus funktionstechnischen Gründen sollte der Neigungswinkel der Kulissenbahnen gegenüber der Senkrechten auf der Längsachse der Kolbenstange maximal 45° betragen.

Eine dritte erfindungsgemäße Modifikation der Kulissenführung, die sowohl bei senkrechter als auch bei geneigter Ausrichtung der Kulissenbahnen anwendbar ist, sieht vor, dass mindestens eine der Kulissenbahnen der Kulissenführung in einem mittleren Abschnitt eine kreisbogenförmige Ausbuchtung aufweist. Durch die Ausbuchtung wird die Kuppe der Hubkurve gekappt beziehungsweise die maximale Amplitude reduziert, und damit der Druckhub des der Ausbuchtung zugewandten Kolbens und der Saughub des der Ausbuchtung abgewandten Kolbens entsprechend reduziert.

Der Radius und die Tiefe der kreisbogenförmigen Ausbuchtung der mindestens einen Kulissenbahn sind vorzugsweise derart bemessen, dass die Hubhöhe der Kolbenstange beim Durchlaufen der Ausbuchtung durch das Antriebselement konstant gehalten wird. Mit einer derartigen Geometrie der Ausbuchtung wird sichergestellt, dass die Kolbenstange beim Durchlaufen der Ausbuchtung durch das Antriebselement nicht verschoben wird, so dass die Hubkurve der Kolben in dem betreffenden Abschnitt einen geraden und keinen wellenförmigen Verlauf aufweist.

Eine vierte erfindungsgemäße Modifikation der Kulissenführung, die sowohl bei senkrechter Ausrichtung der Kulissenbahnen als auch in Kombination mit den vorgenannten Modifikationen der Kulissenführung anwendbar ist, sieht vor, dass die Kulissenbahnen der Kulissenführung in Richtung eines der beiden Kolben kreisbogenförmig gewölbt sind. Durch diese Modifikation der Kulissenführung wird die Hubweite, also der Drehwinkelbereich der Kolbenstange bei der Hubbewegung in Richtung des der Wölbung der Kulissenbahnen zugewandten Zylinders vergrößert, und die Hubweite der Kolbenstange bei der Hubbewegung in Richtung des der Wölbung der Kulissenbahnen abgewandten Zylinders in gleichem Umfang verringert.

Die Erfindung wird nachstehend anhand von vier in der beigefügten Zeichnung dargestellten Ausführungsbeispielen näher erläutert. In der Zeichnung zeigt
Fig. 1 eine erfindungsgemäße erste Ausführungsform eines Doppelkolbenkompressors in einer schematischen Querschnittsansicht,
Fig. 1a die Hubkurve der Kolben des Doppelkolbenkompressors gemäß Fig. 1 in einem Diagramm,
Fig. 2 eine erfindungsgemäße zweite Ausführungsform eines Doppelkolbenkompressors in einer schematischen Querschnittsansicht,
Fig. 2a die Hubkurve der Kolben des Doppelkolbenkompressors gemäß Fig. 2 in einem Diagramm,
Fig. 3 eine erfindungsgemäße dritte Ausführungsform eines Doppelkolbenkompressors in einer schematischen Querschnittsansicht,
Fig. 3a die Hubkurve der Kolben des Doppelkolbenkompressors gemäß Fig. 3 in einem Diagramm,
Fig. 4 eine erfindungsgemäße vierte Ausführungsform eines Doppelkolbenkompressors in einer schematischen Querschnittsansicht,
Fig. 4a die Hubkurve der Kolben des Doppelkolbenkompressors gemäß Fig. 4 in einem Diagramm,
Fig. 5 eine bekannte Ausführung eines Doppelkolbenkompressors in einer schematischen Querschnittsansicht,
Fig. 5a die Hubkurve der Kolben des Doppelkolbenkompressors gemäß Fig. 5 in einem Diagramm,
Fig. 6a eine erste Ausführungsform eines Antriebselementes einer Kulissenführung der Doppelkolbenkompressoren gemäß den Figuren 1 bis 5 in einer ausschnittweisen Querschnittsansicht,
Fig. 6b eine zweite Ausführungsform des Antriebselementes einer Kulissenführung der Doppelkolbenkompressoren gemäß den Figuren 1 bis 5 in einer ausschnittweisen Querschnittsansicht,
Fig. 6c eine dritte Ausführungsform des Antriebselementes einer Kulissenführung der Doppelkolbenkompressoren nach gemäß Figuren 1 bis 5 in einer ausschnittweisen Querschnittsansicht, und
Fig. 6d eine vierte Ausführungsform des Antriebselementes einer Kulissenführung der Doppelkolbenkompressoren nach gemäß Figuren 1 bis 5 in einer ausschnittweisen Querschnittsansicht.

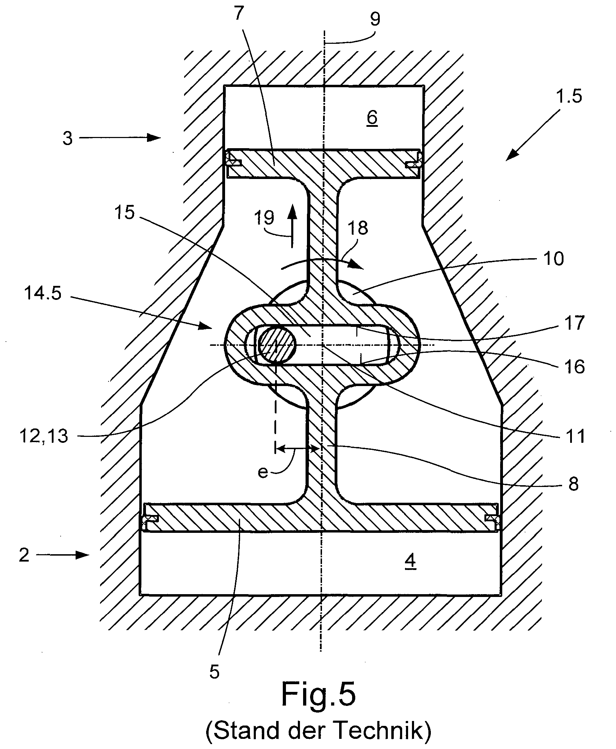

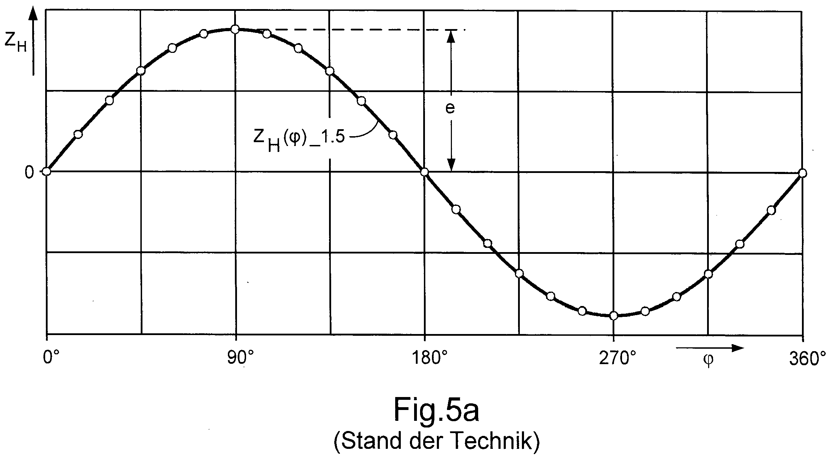

Eine an sich bekannte Ausführungsform eines Doppelkolbenkompressors 1.5 einer Druckluft-Versorgungseinrichtung ist in Fig. 5 in einer schematischen Querschnittsansicht abgebildet. Der Doppelkolbenkompressor 1.5 weist eine Niederdruckstufe 2 und eine Hochdruckstufe 3 auf, die jeweils einen Zylinder 4, 6 mit einem darin axialbeweglich geführten Kolben 5, 7 umfassen. Die beiden Zylinder 4, 6 sind bezüglich einer Drehachse 11 einer Antriebswelle 10 radial gegenüberliegend in einem Gehäuse angeordnet. Die beiden Kolben 5, 7 sind über eine Kolbenstange 8 starr miteinander verbunden und stehen über eine Kulissenführung 14.5 mit der Antriebswelle 10 in Antriebsverbindung. Die Kulissenführung 14.5 umfasst eine in der Kolbenstange 8 ausgebildete, mit zwei parallelen Kulissenbahnen 16, 17 versehene und senkrecht zu der Drehachse 11 der Antriebswelle 10 ausgerichtete Ausnehmung 15, sowie ein mit der Ausnehmung 15 in Eingriff stehendes, bezüglich der Drehachse 11 der Antriebswelle 10 achsparallel und exzentrisch an der Antriebswelle 10 befestigtes Antriebselement 12. Die beiden Kulissenbahnen 16, 17 sind vorliegend senkrecht zu einer Längsachse 9 der Kolbenstange 8 ausgerichtet. Das Antriebselement 12 ist beispielhaft durch einen Kurbelzapfen 13 gebildet, der um die Strecke einer Exzentrizität e radial beabstandet zu der Drehachse 11 an der Antriebswelle 10 befestigt sowie unmittelbar gleitbeweglich an den parallelen Kulissenbahnen 16, 17 der Kulissenführung 14.5 geführt ist.

In Fig. 5a veranschaulicht eine Hubkurve Z_{H}(ϕ)_1.5 die Bewegung der Kolben 5, 7 beziehungsweise der Kolbenstange 8 des bekannten Doppelkolbenkompressors 1.5 bei einer Umdrehung der Antriebswelle 10. Dabei ist der Drehwinkel der Antriebswelle 10 mit ϕ bezeichnet, die Drehrichtung der Antriebswelle 10 entsprechend dem in Fig. 5 abgebildeten Drehrichtungspfeil 18 im Uhrzeigersinn angenommen, die 0°-Stellung der Antriebswelle 10 beziehungsweise des Kurbelzapfens 13 entspricht der in Fig. 5 abgebildeten Position, die Hubhöhe der Kolben 5, 7 ist mit Z_{H} bezeichnet, und die Hubrichtung der Kolben 5, 7 ist entsprechend dem in Fig. 5 abgebildeten Hubrichtungspfeil 19 in Richtung des Zylinders 6 der Hochdruckstufe 3 positiv angenommen. Die in dem Diagramm von Fig. 5a abgebildete Hubkurve Z_{H}(ϕ) der Kolben 5, 7 weist einen regelmäßig sinusförmigen Verlauf mit der Amplitude auf, welche der Exzentrizität e des Kurbelzapfens 13 entspricht. Der Verlauf dieser Hubkurve kann durch Z_{H}(ϕ) = e ∗ sin(ϕ) ausgedrückt werden.

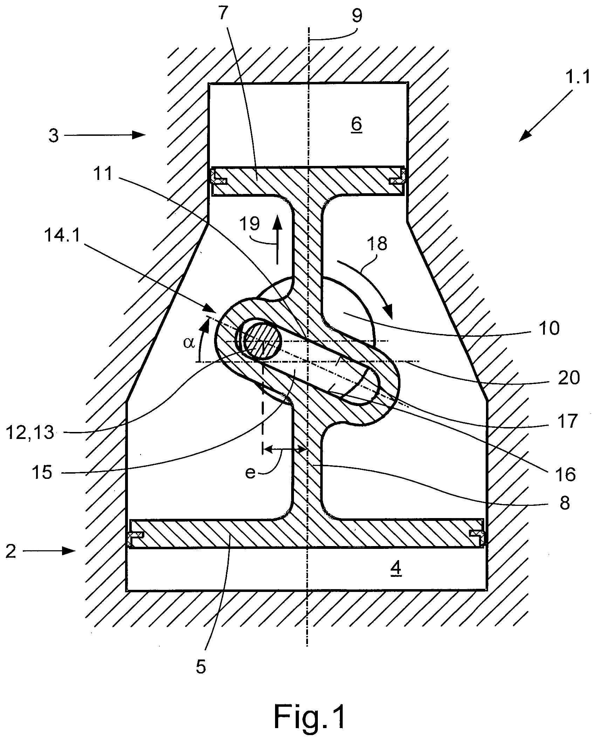

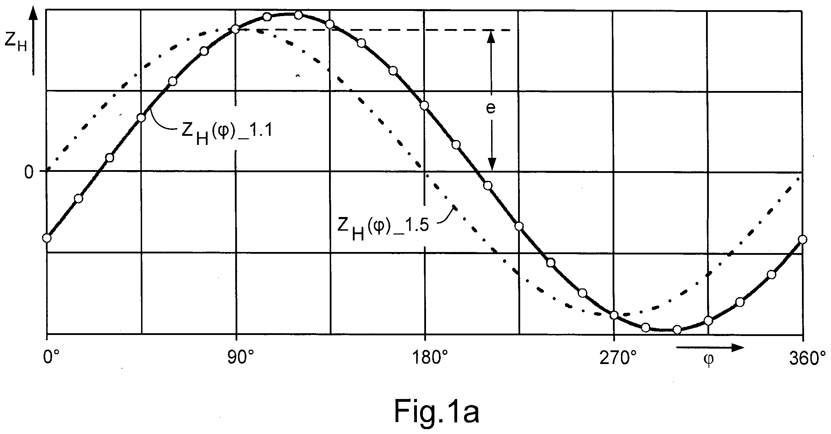

In Fig. 1 ist eine erfindungsgemäße erste Ausführungsform eines Doppelkolbenkompressors 1.1 einer Druckluft-Versorgungseinrichtung in einer schematischen Querschnittsansicht abgebildet, die sich durch eine geänderte Anordnung der Kulissenführung 14.1 von der Ausführungsform des Doppelkolbenkompressors 1.5 gemäß Fig. 5 unterscheidet. Hierbei ist die Ausnehmung 15 mit den beiden parallelen Kulissenbahnen 16, 17 gegenüber einer auf der Längsachse 9 der Kolbenstange 8 stehenden Senkrechten 20 um einen Neigungswinkel von vorliegend α = 25° in der Drehrichtung 18 der Antriebswelle 10 verschwenkt angeordnet.

Die in dem Diagramm von Fig. 1a abgebildete Hubkurve Z_{H}(ϕ)_1.1 der Kolben 5, 7 beziehungsweise der Kolbenstange 8 des Doppelkolbenkompressors 1.1 weist ebenfalls einen regelmäßigen sinusförmigen Verlauf auf. Die Hubkurve Z_{H}(ϕ)_1.1 weist aufgrund der in der Drehrichtung 18 der Antriebswelle 10 geneigten Anordnung der Kulissenbahnen 16, 17 jedoch eine Phasenverschiebung in Richtung spät sowie eine über die Exzentrizität e des Kurbelzapfens 13 hinausgehende Hubhöhe auf. Der Verlauf der Hubkurve Z_{H}(ϕ)_1.1 der Kolben 5, 7 des Doppelkolbenkompressors 1.1 kann mit der Formel Z_{H}(ϕ) = e ∗ (sin(ϕ) - cos(ϕ) ∗ tan(α)) angegeben werden. Zum Vergleich ist in Fig. 1 auch die Hubkurve Z_{H}(ϕ)_1.5 der Kolben 5, 7 des Doppelkolbenkompressors 1.5 gemäß Fig. 5 als Strichpunkt-Kurve eingezeichnet.

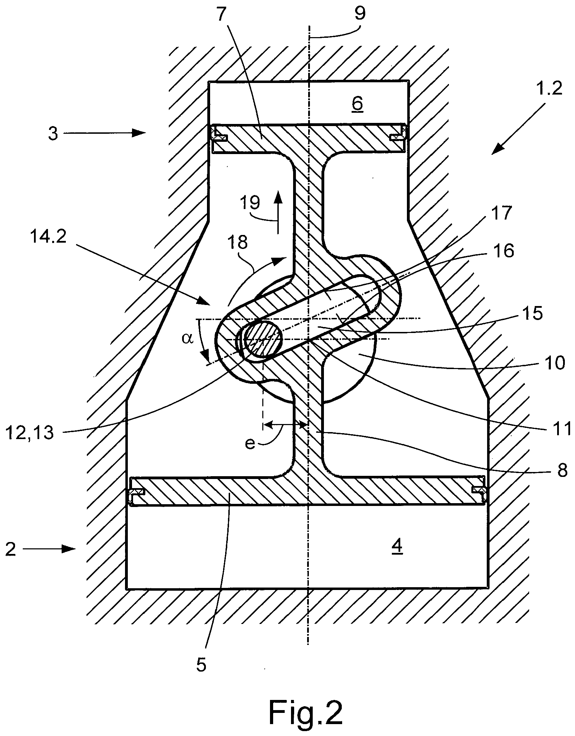

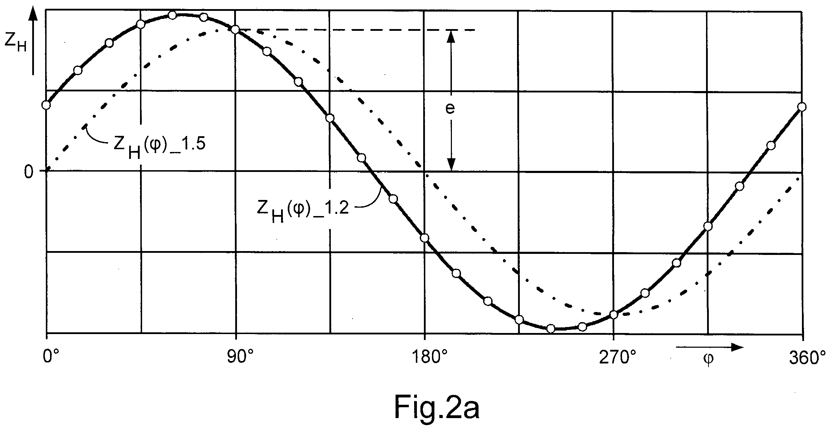

In Fig. 2 ist eine erfindungsgemäße zweite Ausführungsform eines Doppelkolbenkompressors 1.2 einer Druckluft-Versorgungseinrichtung in einer schematischen Querschnittsansicht abgebildet, die sich durch eine in anderer Weise geänderte Anordnung der Kulissenführung 14.2 von der Ausführungsform des Doppelkolbenkompressors 1.5 gemäß Fig. 5 unterscheidet. Nun ist die Ausnehmung 15 mit den beiden parallelen Kulissenbahnen 16, 17 gegenüber der auf der Längsachse 9 der Kolbenstange 8 stehenden Senkrechten 20 um einen Neigungswinkel von vorliegend α = -25° entgegen die Drehrichtung 18 der Antriebswelle 10 verschwenkt angeordnet.

Die in dem Diagramm von Fig. 2a abgebildete Hubkurve Z_{H}(ϕ)_1.2 der Kolben 5, 7 beziehungsweise der Kolbenstange 8 des Doppelkolbenkompressors 1.2 weist wiederum einen regelmäßigen sinusförmigen Verlauf auf, der aufgrund der entgegen der Drehrichtung 18 der Antriebswelle 10 geneigten Anordnung der Kulissenbahnen 16, 17 nun eine Phasenverschiebung in Richtung früh sowie ebenfalls eine über die Exzentrizität e des Kurbelzapfens 13 hinausgehende Hubhöhe aufweist. Der Verlauf der Hubkurve Z_{H}(ϕ)_1-2 der Kolben 5, 7 des Doppelkolbenkompressors 1.2 kann unter Berücksichtigung des negativen Vorzeichens des Neigungswinkels α ebenfalls mit der Formel Z_{H}(ϕ) = e ∗ (sin(ϕ) - cos(ϕ) ∗ tan(α)) angegeben werden. Zum Vergleich ist in Fig. 2 auch die Hubkurve Z_{H}(ϕ)_1.5 der Kolben 5, 7 des Doppelkolbenkompressors 1.5 gemäß Fig. 5 als Strichpunkt-Kurve eingezeichnet.

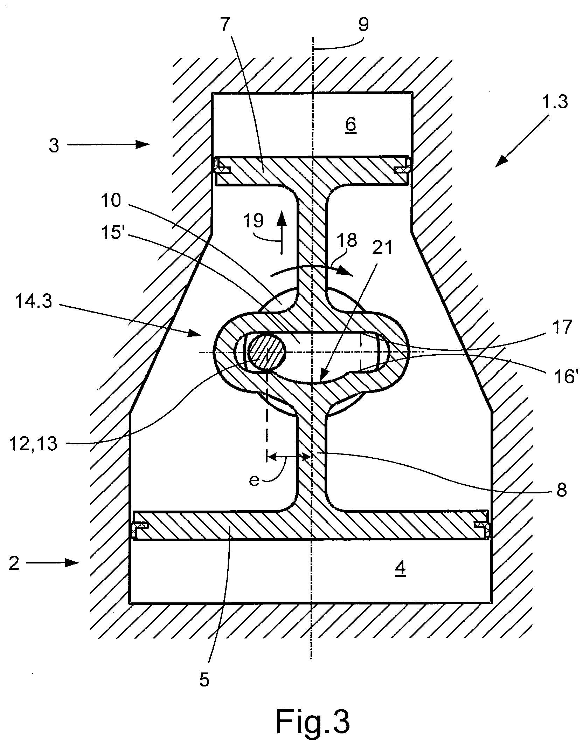

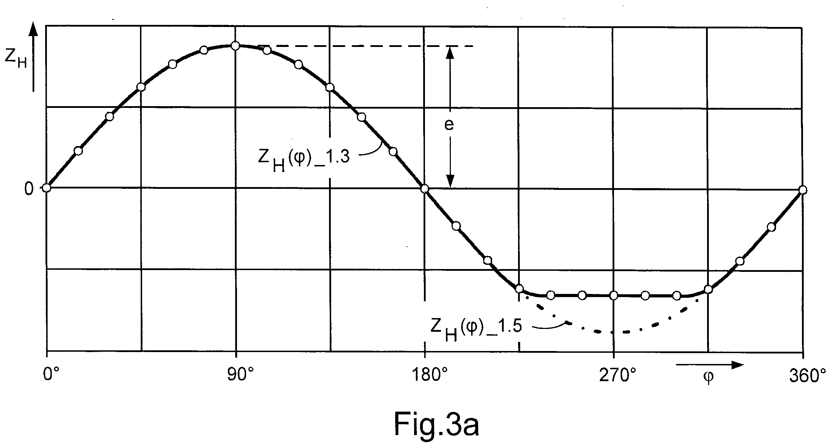

In Fig. 3 ist eine erfindungsgemäße dritte Ausführungsform eines Doppelkolbenkompressors 1.3 einer Druckluft-Versorgungseinrichtung in einer schematischen Querschnittsansicht abgebildet, die sich durch eine geometrisch geänderte Ausbildung der Kulissenführung 14.3 von der Ausführungsform des Doppelkolbenkompressors 1.5 gemäß Fig. 5 unterscheidet. Nun weist im Bereich der Ausnehmung 15' beispielhaft die dem Kolben 5 der Niederdruckstufe 2 zugewandte Kulissenbahn 16' der Kulissenführung 14.3 in einem mittleren Abschnitt eine kreisbogenförmige Ausbuchtung 21 auf. Der Radius und die Tiefe der kreisbogenförmigen Ausbuchtung 21 sind derart bemessen, dass die Hubhöhe Z_{H} der Kolbenstange 8 beim Durchlaufen der Ausbuchtung 21 durch den Kurbelzapfen 13 konstant gehalten wird.

Die in dem Diagramm von Fig. 3a abgebildete Hubkurve Z_{H}(ϕ)_1.3 der Kolben 5, 7 beziehungsweise der Kolbenstange 8 des Doppelkolbenkompressors 1.3 ist im ersten Halbabschnitt von 0° bis 180°, der den Saughub des Kolbens 5 der Niederdruckstufe 2 und den Druckhub des Kolbens 7 der Hochdruckstufe 3 bildet, identisch zu der Hubkurve Z_{H}(ϕ)_1.5 der Kolben 5, 7 des Doppelkolbenkompressors 1.5 gemäß

Fig. 5. Im zweiten Halbabschnitt der Hubkurve Z_{H}(ϕ)_1.3 von >180° bis <360°, der den Druckhub des Kolbens 5 der Niederdruckstufe 2 und den Saughub des Kolbens 7 der Hochdruckstufe 3 bildet, ist dagegen die Kuppe der Hubkurve Z_{H}(ϕ)_1.3 gekappt, so dass der Druckhub des Kolbens 5 der Niederdruckstufe 2 und der Saughub des Kolbens 7 der Hochdruckstufe 3 gegenüber der durch die Exzentrizität e des Kurbelzapfens gegebenen Hubhöhe bei dem Doppelkolbenkompressor 1.5 gemäß Fig. 5 reduziert sind. Zum Vergleich ist in Fig. 3 ebenfalls die Hubkurve Z_{H}(ϕ)_1.5 der Kolben 5, 7 des Doppelkolbenkompressors 1.5 gemäß Fig. 5 als Strichpunkt-Kurve eingezeichnet.

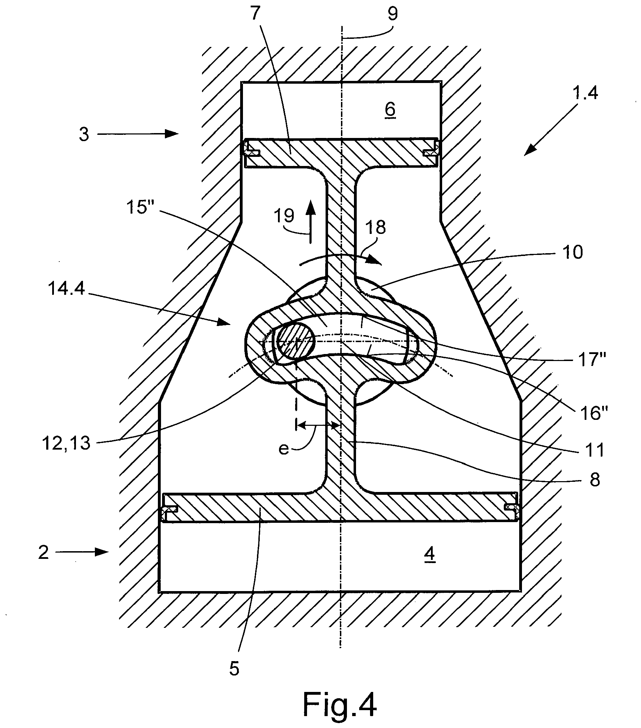

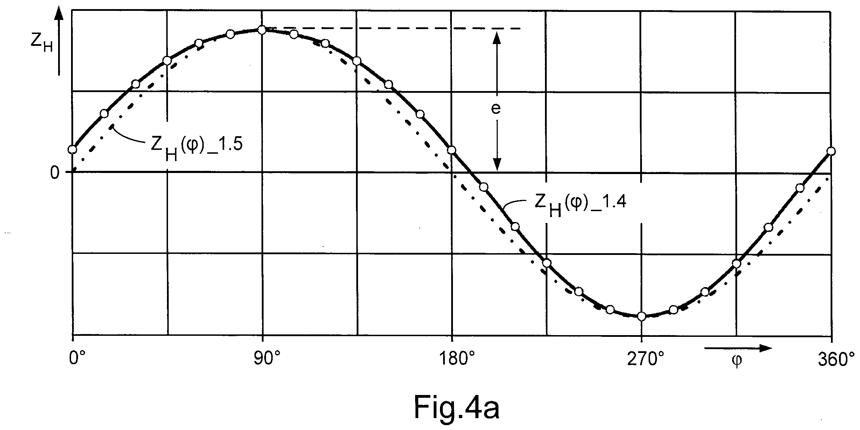

In Fig. 4 ist eine erfindungsgemäße vierte Ausführungsform eines Doppelkolbenkompressors 1.4 einer Druckluft-Versorgungseinrichtung in einer schematischen Querschnittsansicht abgebildet, die sich durch eine in anderer Weise geometrisch geänderte Ausbildung der Kulissenführung 14.4 von der Ausführungsform des Doppelkolbenkompressors 1.5 gemäß Fig. 5 unterscheidet. Nun sind im Bereich der Ausnehmung 15" die beiden Kulissenbahnen 16", 17" der Kulissenführung 14.4 beispielhaft in Richtung des Kolbens 7 der Hochdruckstufe 3 kreisbogenförmig gewölbt ausgeführt.

Wie der in dem Diagramm von Fig. 4a abgebildeten Hubkurve Z_{H}(ϕ)_1.4 der Kolben 5, 7 beziehungsweise der Kolbenstange 8 des Doppelkolbenkompressors 1.4 zu entnehmen ist, wird durch diese Modifikation der Kulissenführung 14.4 die Hubweite, also der Drehwinkelbereich der Kolbenstange 8 bei der Hubbewegung in Richtung des der Wölbung der Kulissenbahnen 16", 17" zugewandten Zylinders 6 der Hochdruckstufe 3 vergrößert, und die Hubweite der Kolbenstange 8 bei der Hubbewegung in Richtung des der Wölbung der Kulissenbahnen 16", 17" abgewandten Zylinders 5 der Niederdruckstufe 2 in gleichem Umfang verringert. Die Phasenlage und die Hubhöhe der Hubkurve Z_{H}(ϕ)_1.4 der Kolben 5, 7 des Doppelkolbenkompressors 1.4 werden dagegen unverändert beibehalten. Zum Vergleich ist in Fig. 4 wiederum die Hubkurve Z_{H}(ϕ)_1.5 der Kolben 5, 7 des Doppelkolbenkompressors 1.5 gemäß Fig. 5 als Strichpunkt-Kurve eingezeichnet.

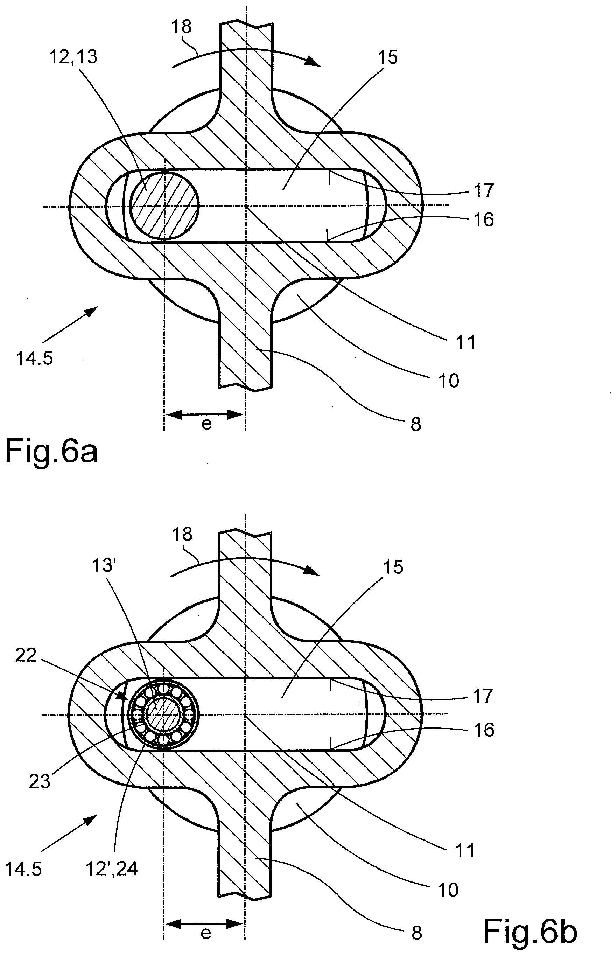

In den nachfolgend beschriebenen Figuren 6a bis 6d sind am Beispiel der bekannten Kulissenführung 14.5 des Doppelkolbenkompressors 1.5 gemäß Fig. 5 mögliche Ausführungen des Antriebselementes 12 in einer ausschnittweisen Querschnittsansicht dargestellt.

In der in Fig. 6a gezeigten ersten Ausführungsform ist das Antriebselement 12 als ein Kurbelzapfen 13 ausgebildet, der um die Exzentrizität e radial beabstandet zu der Drehachse 11 an der Antriebswelle 10 befestigt sowie unmittelbar gleitbeweglich an den parallelen Kulissenbahnen 16, 17 der Kulissenführung 14.5 geführt ist. Diese Ausführungsform des Antriebselementes 12 ist beispielhaft in den Abbildungen der Ausführungen des Doppelkolbenkompressors 1.1 - 1.5 in den Figuren 1 bis 5 verwendet worden. Der Kurbelzapfen 13 ist erkennbar mit Spiel in der Ausnehmung 15 der Kolbenstange 8 angeordnet.

Gemäß der in Fig. 6b abgebildeten zweiten Ausführungsform ist das Antriebselement 12' durch den Außenring 24 eines Wälzlagers 22 gebildet. Das Wälzlager 22 ist mit seinem Innenring 23 auf einem Kurbelzapfen 13' angeordnet, der um die Exzentrizität e radial beabstandet zu der Drehachse 11 an der Antriebswelle 10 befestigt ist. Der Außenring 24 des Wälzlagers 22 ist rollbeweglich an den parallelen Kulissenbahnen 16, 17 der Kulissenführung 14.5 geführt. Mit dieser Ausführung des Antriebselementes 12' ist die Kulissenführung 14.5 deutlich widerstands- und verschleißärmer als mit der Ausführung des Antriebselementes 12 gemäß Fig. 6a.

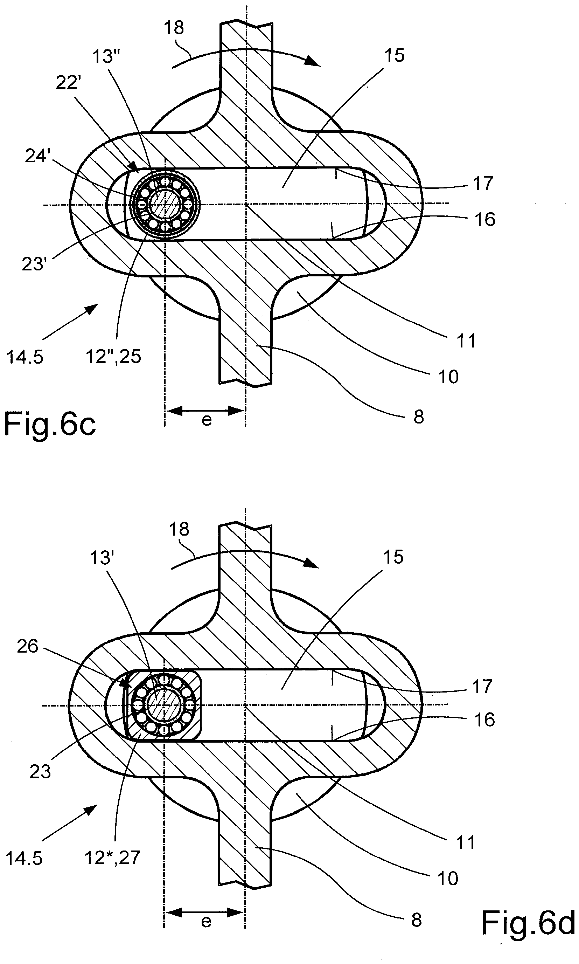

In einer in Fig. 6c abgebildeten dritten Ausführungsform ist das Antriebselement 12" durch einen Gleitlagerring 25 gebildet, der auf dem Außenring 24' eines Wälzlagers 22' gleitgelagert ist. Das Wälzlager 22' ist mit seinem Innenring 23' auf einem Kurbelzapfen 13' angeordnet, der um die Exzentrizität e radial beabstandet zu der Drehachse 11 an der Antriebswelle 10 befestigt ist. Der Gleitlagerring 25 ist rollbeweglich an den parallelen Kulissenbahnen 16, 17 der Kulissenführung 14.5 geführt. Mit dieser Ausführung des Antriebselementes 12" ist die Kulissenführung 14.5 nochmals widerstands- und verschleißärmer als mit der Ausführung des Antriebselementes 12' gemäß Fig. 6b.

In einer in Fig. 6d abgebildeten vierten Ausführungsform ist das Antriebselement 12* durch einen außen weitgehend rechteckigen Gleitkörper 27 gebildet, der über ein Wälzlager 26 drehbar auf einem Kurbelzapfen 13' gelagert ist. Der Kurbelzapfen 13' ist um die Exzentrizität e radial beabstandet zu der Drehachse 11 an der Antriebswelle 10 befestigt. Der Gleitkörper 27 ist gleitbeweglich an den parallelen Kulissenbahnen 16, 17 der Kulissenführung 14.5 geführt. Aufgrund der geringen Flächenpressung zwischen dem Gleitkörper 27 und den Kulissenbahnen 16, 17 ist die Kulissenführung 14.5 auch mit dieser Ausführung des Antriebselementes 12* relativ widerstands- und verschleißarm.

### Bezugszeichenliste (Bestandteil der Beschreibung)

- 1.1: Doppelkolbenkompressor, erste Ausführungsform
- 1.2: Doppelkolbenkompressor, zweite Ausführungsform
- 1.3: Doppelkolbenkompressor, dritte Ausführungsform
- 1.4: Doppelkolbenkompressor, vierte Ausführungsform
- 1.5: Doppelkolbenkompressor, bekannte Ausführungsform
- 2: Niederdruckstufe
- 3: Hochdruckstufe
- 4: Zylinder
- 5: Kolben
- 6: Zylinder
- 7: Kolben
- 8: Kolbenstange
- 9: Längsachse der Kolbenstange
- 10: Antriebswelle
- 11: Drehachse der Antriebswelle
- 12: Antriebselement
- 12', 12": Antriebselement
- 12*: Antriebselement
- 13: Kurbelzapfen
- 13', 13": Kurbelzapfen
- 14.1: Kulissenführung, erste Ausführung
- 14.2: Kulissenführung, zweite Ausführung
- 14.3: Kulissenführung, dritte Ausführung
- 14.4: Kulissenführung, vierte Ausführung
- 14.5: Kulissenführung, bekannte Ausführung
- 15: Ausnehmung
- 15': Ausnehmung
- 15": Ausnehmung
- 16: Erste Kulissenbahn
- 16': Erste Kulissenbahn
- 16": Erste Kulissenbahn
- 17: Zweite Kulissenbahn
- 17": Zweite Kulissenbahn
- 18: Drehrichtungspfeil, Drehrichtung
- 19: Hubrichtungspfeil, Hubrichtung
- 20: Senkrechte
- 21: Ausbuchtung der ersten Kulissenbahn 16'
- 22, 22': Wälzlager
- 23, 23': Innenring
- 24, 24': Außenring
- 25: Gleitlagerring
- 26: Wälzlager
- 27: Gleitkörper
- e: Exzentrizität
- Z_{H}: Hubhöhe
- Z_{H}(ϕ)_1-1: Hubkurve
- Z_{H}(ϕ)_1-2: Hubkurve
- Z_{H}(ϕ)_1.3: Hubkurve
- Z_{H}(ϕ)_1.4: Hubkurve
- Z_{H}(ϕ)_1.5: Hubkurve
- α: Neigungswinkel
- tan(α): Tangens des Neigungswinkels
- ϕ: Drehwinkel
- sin(ϕ): Sinus des Drehwinkels
- cos(ϕ): Kosinus des Drehwinkels

## Patentansprüche

1. Doppelkolbenkompressor (1.1, 1.2, 1.3, 1.4) einer Druckluft-Versorgungseinrichtung, mit einer Niederdruckstufe (2) und einer Hochdruckstufe (3), die jeweils einen Zylinder (4, 6) mit einem darin axialbeweglich geführten Kolben (5, 7) aufweisen,
wobei die beiden Zylinder (4, 6) bezüglich einer Drehachse (11) einer Antriebswelle (10) radial gegenüber angeordnet sind,
wobei die beiden Kolben (5, 7) mittels einer Kolbenstange (8) starr miteinander verbunden sind,
wobei die beiden Kolben (5, 7) über eine Kulissenführung mit der Antriebswelle (10) in Triebverbindung sind,
wobei die Kulissenführung eine in der Kolbenstange (8) angeordnete, mit zwei Kulissenbahnen versehene und senkrecht zu der Drehachse (11) der Antriebswelle (10) ausgerichtete Ausnehmung (15) aufweist,
und bei der die Kulissenführung ein mit der Ausnehmung (15) in Eingriff stehendes, bezüglich der Drehachse (11) der Antriebswelle (10) achsparallel angeordnetes, und mit einer Exzentrizität (e) an der Antriebswelle (10) befestigtes Antriebselement (12) aufweist,
**dadurch gekennzeichnet,**
**dass** die zwei Kulissenbahnen (16, 16', 16", 17, 17") der Kulissenführung (14.1, 14.2, 14.3, 14.4) derart ausgebildet und angeordnet sind,
**dass** im Betrieb des Doppelkolbenkompressors die Bewegung der Kolben (5, 7) einer Hubkurve (Z_{H}(ϕ)_1.1, Z_{H}(ϕ)_1.2, Z_{H}(ϕ)_1.3, Z_{H}(ϕ)_1.4) folgt,
welche von einer regelmäßigen sinusförmigen Hubkurve (Z_{H}(ϕ)_1.5) abweicht, die eine Amplitude gemäß der Exzentrizität (e) des Antriebselementes (12) aufweist.

2. Doppelkolbenkompressor (1.1) nach Anspruch 1, **dadurch gekennzeichnet, dass** die Kulissenbahnen (16, 17) der Kulissenführung (14.1) gegenüber einer Senkrechten (20) auf einer Längsachse (9) der Kolbenstange (8) in der Drehrichtung (18) der Antriebswelle (10) geneigt angeordnet sind.

3. Doppelkolbenkompressor (1.2) nach Anspruch 1, **dadurch gekennzeichnet, dass** die Kulissenbahnen (16, 17) der Kulissenführung (14.2) gegenüber einer Senkrechten (20) auf der Längsachse (9) der Kolbenstange (8) entgegen der Drehrichtung (18) der Antriebswelle (10) geneigt angeordnet sind.

4. Doppelkolbenkompressor (1.1, 1.2) nach Anspruch 2 oder 3, **dadurch gekennzeichnet, dass** der Neigungswinkel (α) der Kulissenbahnen (16, 17) gegenüber einer Senkrechten (20) auf der Längsachse (9) der Kolbenstange (8) maximal 45° beträgt.

5. Doppelkolbenkompressor (1.3) nach einem der Ansprüche 1 bis 4, **dadurch gekennzeichnet, dass** mindestens eine der Kulissenbahnen (16') der Kulissenführung (14.3) in einem mittleren Abschnitt eine kreisbogenförmige Ausbuchtung (21) aufweist.

6. Doppelkolbenkompressor (1.3) nach Anspruch 5, **dadurch gekennzeichnet, dass** der Radius und die Tiefe der kreisbogenförmigen Ausbuchtung (21) der mindestens einen Kulissenbahn (16') derart bemessen sind, dass die Hubhöhe (Z_{H}) der Kolbenstange (8) beim Durchlaufen der Ausbuchtung (21) durch das Antriebselement (12) konstant gehalten wird.

7. Doppelkolbenkompressor (1.4) nach einem der Ansprüche 1 bis 6, **dadurch gekennzeichnet, dass** die Kulissenbahnen (16", 17") der Kulissenführung (14.4) in Richtung eines der beiden Kolben (5, 7) kreisbogenförmig gewölbt sind.

## Claims

1. Double-piston compressor (1.1, 1.2, 1.3, 1.4) of a compressed air supply device, having a low pressure stage (2) and a high pressure stage (3), which each have a cylinder (4, 6) with a piston (5, 7) guided in an axially movable manner therein,
wherein the two cylinders (4, 6) are arranged radially opposite with respect to an axis of rotation (11) of a drive shaft (10),
wherein the two pistons (5, 7) are rigidly connected to one another by means of a piston rod (8),
wherein the two pistons (5, 7) are drivingly connected to the drive shaft (10) via a sliding block guide,
wherein the sliding block guide has a recess (15) which is arranged in the piston rod (8), is provided with two sliding block tracks and is aligned perpendicularly to the axis of rotation (11) of the drive shaft (10),
and in which the sliding block guide has a drive element (12) which is in engagement with the recess (15), is arranged axially parallel with respect to the axis of rotation (11) of the drive shaft (10) and is secured on the drive shaft (10) with an eccentricity (e),
**characterized in that**,
the two sliding block tracks (16, 16', 16", 17, 17") of the sliding block guide (14.1, 14.2, 14.3, 14.4) are constructed and arranged such that,
during operation of the double-piston compressor, the movement of the pistons (5, 7) follows a stroke curve (Z_{H}(φ)_1.1, Z_{H}(φ)_1.2, Z_{H}(φ)_1.3, Z_{H}(φ)_1.4)
which deviates from a regular sinusoidal stroke curve (Z_{H}(φ)_1.5), which has an amplitude corresponding to the eccentricity (e) of the drive element (12).

2. Double-piston compressor (1.1) according to Claim 1, **characterized in that** the sliding block tracks (16, 17) of the sliding block guide (14.1) are arranged at an inclination in the direction of rotation (18) of the drive shaft (10) relative to a perpendicular (20) on a longitudinal axis (9) of the piston rod (8).

3. Double-piston compressor (1.2) according to Claim 1, **characterized in that** the sliding block tracks (16, 17) of the sliding block guide (14.2) are arranged at an inclination in opposition to the direction of rotation (18) of the drive shaft (10) relative to a perpendicular (20) on the longitudinal axis (9) of the piston rod (8).

4. Double-piston compressor (1.1, 1.2) according to Claim 2 or 3, **characterized in that** the angle of inclination (α) of the sliding block tracks (16, 17) relative to a perpendicular (20) on the longitudinal axis (9) of the piston rod (8) is a maximum of 45°.

5. Double-piston compressor (1.3) according to one of Claims 1 to 4, **characterized in that** at least one of the sliding block tracks (16') of the sliding block guide (14.3) has a circular-arc-shaped indentation (21) in a central portion.

6. Double-piston compressor (1.3) according to Claim 5, **characterized in that** the radius and the depth of the circular-arc-shaped indentation (21) of the at least one sliding block track (16') are dimensioned such that the stroke height (Z_{H}) of the piston rod (8) when the drive element (12) passes through the indentation (21) is kept constant.

7. Double-piston compressor (1.4) according to one of Claims 1 to 6, **characterized in that** the sliding block tracks (16", 17") of the sliding block guide (14. 4) are curved in the shape of a circular arc in the direction of one of the two pistons (5, 7).

## Revendications

1. Compresseur à piston double (1.1, 1.2, 1.3, 1.4) d'un dispositif d'alimentation en air comprimé, avec un étage basse pression (2) et un étage haute pression (3), qui présentent respectivement un cylindre (4, 6) avec un piston (5, 7) guidé en mouvement axial dans celui-ci,
dans lequel les deux cylindres (4, 6) sont disposés radialement l'un en face de l'autre par rapport à un axe de rotation (11) d'un arbre d'entraînement (10),
dans lequel les deux pistons (5, 7) sont rigidement reliés l'un à l'autre au moyen d'une tige de piston (8),
dans lequel les deux pistons (5, 7) sont en liaison d'entraînement avec l'arbre d'entraînement (10) par l'intermédiaire d'un guidage à coulisse,
dans lequel le guidage à coulisse présente un évidement (15) disposé dans la tige de piston (8), doté de deux faces de coulisse et orienté perpendiculairement à l'axe de rotation (11) de l'arbre d'entraînement (10), et
dans lequel le guidage à coulisse présente un élément d'entraînement (12) en prise avec l'évidement (15), disposé avec un axe parallèle à l'axe de rotation (11) de l'arbre d'entraînement (10) et fixé à l'arbre d'entraînement (10) avec une excentricité (e),
**caractérisé en ce que** les deux faces de coulisse (16, 16', 16", 17, 17") du guidage à coulisse (14.1, 14.2, 14.3, 14.4) sont configurées et disposées de telle manière que, pendant le fonctionnement du compresseur à piston double, le mouvement des pistons (5, 7) suive une courbe de course (Z_{H}(ϕ)_1.1, Z_{H}(ϕ)_1.2, Z_{H}(ϕ)_1.3, Z_{H}(ϕ)_1.4),
qui s'écarte d'une courbe de course sinusoïdale régulière (Z_{H}(ϕ)_1.5), qui présente une amplitude selon l'excentricité (e) de l'élément d'entraînement (12).

2. Compresseur à piston double (1.1) selon la revendication 1, **caractérisé en ce que** les faces de coulisse (16, 17) du guidage à coulisse (14.1) sont disposées de façon inclinée dans le sens de rotation (18) de l'arbre d'entraînement (10) par rapport à une perpendiculaire (20) à un axe longitudinal (9) de la tige de piston (8).

3. Compresseur à piston double (1.2) selon la revendication 1, **caractérisé en ce que** les faces de coulisse (16, 17) du guidage à coulisse (14.2) sont disposées de façon inclinée à l'inverse du sens de rotation (18) de l'arbre d'entraînement (10) par rapport à une perpendiculaire (20) à l'axe longitudinal (9) de la tige de piston (8) .

4. Compresseur à piston double (1.1, 1.2) selon une revendication 2 ou 3, **caractérisé en ce que** l'angle d'inclinaison (α) des faces de coulisse (16, 17) par rapport à une perpendiculaire (20) à l'axe longitudinal (9) de la tige de piston (8) vaut au maximum 45°.

5. Compresseur à piston double (1.3) selon l'une quelconque des revendications 1 à 4, **caractérisé en ce qu'**au moins une des faces de coulisse (16') du guidage à coulisse (14.3) présente un creux en forme d'arc de cercle (21) dans une partie centrale.

6. Compresseur à piston double (1.3) selon la revendication 5, **caractérisé en ce que** le rayon et la profondeur du creux en forme d'arc de cercle (21) de ladite au moins une face de coulisse (16') sont dimensionnés de telle manière que la hauteur de course (Z_{H}) de la tige de piston (8) lors du franchissement du creux (21) par l'élément d'entraînement (12) soit maintenue constante.

7. Compresseur à piston double (1.4) selon l'une quelconque des revendications 1 à 6, **caractérisé en ce que** les faces de coulisse (16", 17") du guidage à coulisse (14.4) sont bombées en forme d'arc de cercle en direction d'un des deux pistons (5, 7).
